# EUROPÄISCHE PATENTSCHRIFT

(11) **EP 0 584 734 B1**
(45) Veröffentlichungstag und Bekanntmachung des Hinweises auf die Patenterteilung: **20.11.1996**
(21) Anmeldenummer: 93113332.6
(22) Anmeldetag: 20.08.1993
(51) Int. Cl.: C08F 283/00, C08F 299/00, C08F 2/26

(54) **Wässrige, strahlenhärtbare Bindemitteldispersionen**
Aqueous radiation curable dispersions of binders
Dispersions aqueuses de liants durcissables par irradiation

(30) Priorität: 28.08.1992 DE 4228713
(43) Veröffentlichungstag der Anmeldung: 02.03.1994
(73) Patentinhaber: HOECHST AKTIENGESELLSCHAFT, 65926 Frankfurt am Main (DE)
(72) Erfinder: Brindöpke, Gerhard, Dr., D-65843 Sulzbach (DE); Kurth, Inge, D-65193 Wiesbaden (DE)

(56) Entgegenhaltungen:
- EP-A- 0 098 752
- EP-A- 0 181 486
- EP-A- 0 183 119
- EP-A- 0 453 838
- US-A- 4 153 778

## Beschreibung

Die Erfindung betrifft wäßrige, strahlenhärtbare Bindemitteldispersionen, die frei von Lösemitteln sind. Die Dispersionen enthalten ein strahlenhärtbares Bindemittel und einen strahlenhärtbaren Emulgator.

(Meth)Acryloylgruppen aufweisende Polyurethane (sogenannte Urethan(meth)acrylate oder Polyepoxide) sind seit langem bekannt und als Bindemittel für z.B. Lacke sehr gut geeignet (vgl. z.B. DE-OS 27 37 406). Die relativ hohe Viskosität dieser Produkte erfordert praktisch immer die Mitverwendung von organischen Lösungsmitteln.

Auch wasserverdünnbare Urethan(meth)acrylate sind bekannt (vgl. z.B. DE-OS 29 36 039). Die Hydrophilie dieser bekannten Systeme basiert auf der Anwesenheit von ionischen Zentren, insbesondere von Sulfonatgruppen, die als Gegenionen Alkalikationen oder Ammoniumionen (aus tert. Aminen) aufweisen, die in den aus den Systemen letztendlich erhaltenen Überzügen wenigstens zum Teil verbleiben und deren Wasserresistenz erheblich beeinträchtigen.

Eine andere Möglichkeit zu wasserverdünnbaren Produkten zu gelangen, besteht im Einsatz von externen Emulgatoren. So werden beispielsweise gemäß US-PS 4,070,323 Acryloylgruppen tragende Polyurethane mit Hilfe von anionischen oder kationischen Öl-in-Wasser-Emulgatoren (z.B. Natriumlaurylsulfat) in Wasser dispergiert. Diese Emulgatoren werden bei der radikalischen Vernetzung nicht in den Lackfilm eingebaut. Infolgedessen wird der Grad der erreichbaren Wasserfestigkeit der Lackfilme nicht unwesentlich herabgesetzt.

In der DE 39 00 257 wird beschrieben, durch Umsetzung eines Polyethylenglykols mit einem Polyisocyanat und einem Hydroxyalkyl(meth)acrylat ein hydrophiles, strahlenhärtbares Urethanacrylat aufzubauen, das als Emulgator für hydrophobe Urethanacrylate dienen kann. Durch die ungenügende Trennung des hydrophoben Emulgatorsegmentes vom hydrophilen Polyethylenglykolsegment sind die emulgierenden Eigenschaften dieser Produkte beschränkt und die Stabilität der daraus hergestellten Dispersionen eingeschränkt.

Der Erfindung lag daher die Aufgabe zugrunde, strahlenhärtbare Dispersionen mit verbesserter Stabilität bereitzustellen. Diese Aufgabe wird dadurch gelöst, daß solche hydrophilen, strahlenhärtbaren Polyurethanacrylate zur Verfügung gestellt werden, die neben dem Polyethylenglykol noch eine Polyhydroxycarbonsäure als hydrophiles Segment enthalten.

Gegenstand der Erfindung sind somit wäßrige strahlenhärtbare Bindemitteldispersionen enthaltend im wesentlichen Massenanteile bezogen auf die Summe der Massen von (A) und (B) von
A) 50 bis 95 % eines strahlenhärtbaren, (Meth)acrylatgruppen enthaltenden Bindemittels und
B) 5 bis 50% eines strahlenhärtbaren, als Emulgator wirkenden Polyurethans mit einer gewichtsmittleren molaren Masse von 1 bis 30 kg/mol, erhalten durch Umsetzung von Hydroxyalkyl(meth)acrylaten mit einer molaren Masse von 116 bis 1000 g/mol, Polyalkylenätherglykolen mit einer zahlenmittleren molaren Masse von 400 bis 20 000 g/mol, wobei mindestens 80 % der Oxyalkyleneinheiten Oxyäthyleneinheiten sind, Polyhydroxycarbonsäuren und Polyisocyanaten.

Als Komponente A) kommen alle bekannten Bindemittel in Frage, die (Meth)acryloylgruppen tragen und daher strahlenhärtbar sind. Beispiele für solche polymeren Bindemittel sind Polyacrylate, Polyepoxyacrylate, Polyurethanacrylate, Polyesteracrylate, Polyetheracrylate, Melamin-Acrylate oder deren Gemische. Polymere dieser Art sind im Detail beschrieben in "UV&EB Curing Formulation for Printing Inks, Coatings & Paints", edited by R. Holman & P. Oldring, London 1988, ISBN 0 947798 02 1.

Der strahlenhärtbare Emulgator B) ist ein Polyurethan(meth)acrylat mit einem Gehalt an (Meth)acryloyl-Gruppen. Die Herstellung dieses Emulgators erfolgt durch Reaktion von Hydroxyalkyl(meth)acrylat, Polyglykol, Polyhydroxycarbonsäure und einem Polyisocyanat.

Bei den Polyglykolen handelt es sich um lineare Polyetherglykole eines als Zahlenmittel bestimmten Molekulargewichts von 400 bis 20000, vorzugsweise 600 bis 15000, deren Alkylenoxideinheiten zumindest zu 80 %, vorzugsweise zu 100 % Ethylenoxideinheiten darstellen. Der Begriff "Polyethylenglykole" soll somit nicht nur echte Polyethylenglykole, deren Alkylenoxideinheiten ausschließlich Ethylenoxideinheiten darstellen, sondern auch Polyalkylenglykole umfassen deren Alkylenoxideinheiten überwiegend, d.h. zumindest zu 80 % Ethylenoxideinheiten darstellen. Derartige "gemischte" Polyalkylenglykole entstehen beispielsweise durch Verwendung von Gemischen verschiedener Alkylenoxide beispielsweise von Ethylenoxid und Propylenoxid im Molverhältnis ≧ 4:1 bei der Herstellung der Polyetherglykole durch Alkoxylierung geeigneter zweiwertiger Startermoleküle wie beispielsweise Wasser, Ethylenglykol oder Propylenglykol. Bevorzugt sind jedoch reine Polyethylenglykole.

Bei den Hydroxyalkyl(meth)acrylaten handelt es sich um (Meth)acryloylgruppen aufweisende ein- oder mehrwertige Alkohole bzw. um beliebige Gemische derartiger Alkohole. Hierunter sind in der Regel pro Molekül eine freie Hydroxylgruppe aufweisende Ester der Acrylsäure oder der Methacrylsäure mit mehrwertigen Alkoholen zu verstehen. Die Ester weisen ein als Zahlenmittel bestimmtes Molekulargewicht von 116 bis 1000, vorzugsweise 116 bis 750 auf. Beispiele für solche ethylenisch ungesättigten Partialester sind Hydroxyethyl(meth)acrylat, 2- und 3-Hydroxypropyl(meth)acrylat 2-, 3- und 4-Hydroxybutyl(meth)acrylat und Umsetzungsprodukte aus (oxalkyliertem) Trimethylolpropan mit (Meth)acrylsäure wie z.B. das Reaktionsprodukt aus 2 Mol Acrylsäure und 1 Mol eines oxethylierten Trimethylolpropans (OH-Zahl 550, Oxethylierungsgrad ca. 4) sowie Trimethylolpropandiacrylat und Pentaerythrittriacrylat.

Weiterhin kommen hier in Frage Umsetzungsprodukte von (Meth)acrylsäure mit endständigen oder mittelständigen Epoxiden, wie z.B. Hexenoxid, Dodecenoxid oder epoxidiertes Lein- oder Sojaöl sowie Umsetzungsprodukte dieser Säuren mit Glycidylestern, vorzugsweise von in α-Stellung verzweigten, gesättigten aliphatischen Monocarbonsäuren mit 8 - 14 C-Atomen, wie z.B. ®Cardura E 10 (Glycidylester der "Versaticsäure"). In gewissen Mengen können auch Umsetzungsprodukte von Acryl- oder Methacrylsäure mit Polyepoxiden wie z.B. die Diglycidylether der Bisphenol A oder F, oder des Hexan-, Butan- oder Neopentylglykols oder des Cyclohexandimethanols mitverwendet werden.

Diese Verbindungen tragen zwei Hydroxyl- und Acrylsäuregruppen und können somit, falls gewünscht, einen zusätzlichen Molekulargewichtsaufbau bewirken. Besondere Eigenschaften sind beim Einsatz eines Reaktionsproduktes von Hydroxyalkyl-(meth)acrylat mit ε-Caprolacton zu erhalten.

Beispiele für Polyhydroxycarbonsäuren sind Zitronensäure, Apfelsäure oder 2,2-Bis(hydroxymethyl)alkancarbonsäuren mit insgesamt mindestens 5 Kohlenstoffatomen, vorzugsweise 2,2-Bis(hydroxymethyl)propionsäure.

Geeignete Polyisocyanate sind beliebige aus der Polyurethanchemie an sich bekannte organische Polyisocyanate mit aliphatisch, cycloaliphatisch und/oder aromatisch gebundenen Isocyanatgruppen, die vorzugsweise ein Molekulargewicht von 168 bis 1000, vorzugsweise von 168 bis 300, aufweisen. Geeignet sind beispielsweise 1-Isocyanato-3,3,5-trimethyl-5-isocyanatomethyl-cyclohexan (IPDI), 4,4'-Diisocyanato-dicyclohexylmethan, 4,4'-Diisocyanatodiphenylmethan, dessen technische Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol, Hexamethylendiisocyanat, Trimethylhexamethylendiisocyanat oder Tetramethylenxylylendiisocyanat (TMXDI).

Geeignet sind auch Biuret-, Isocyanurat- oder Urethan-modifizierte Polyisocyanate auf Basis dieser einfachen Polyisocyanate. Diese Derivate weisen im allgemeinen ein bis zu 1000 liegendes Molekulargewicht auf. Die Herstellung derartiger Derivate ist beispielsweise in US-PS 3,124,604, US-PS 3,183,112, US-PS 3,919,218 oder US-PS 4,324,879 beschrieben.

Die Herstellung der erfindungsgemäßen, als Emulgatoren zu verwendenden Polyurethane durch Umsetzung der genannten Ausgangskomponenten kann in Substanz oder in gegenüber Isocyanatgruppen inerten Lösungsmitteln wie beispielsweise Aceton, Methylethylketon, Ethylacetat, Butylacetat, Toluol, niedermolekularen Estern der (Meth)acrylsäure oder Gemischen derartiger Lösungsmittel erfolgen, wobei vorzugsweise Reaktionstemperaturen von 20 bis 100 °C, insbesondere 20 bis 80 °C eingehalten werden.

Die Reaktion kann auch in Gegenwart eines strahlenhärtbaren inerten Reaktivverdünners wie z.B. Hexandiolacrylat, Trimethylolpropantriacrylat oder des Triacrylats vom ethoxylierten Trimethylolpropan durchgeführt werden.

In der Praxis kann beispielsweise so vorgegangen werden, daß das Polyisocyanat vorgelegt und unter milden Bedingungen, z.B. innerhalb der obengenannten Temperaturbereiche mit dem Hydroxyalkyl(meth)acrylat umgesetzt wird, worauf sich die Umsetzung mit dem Polyethylenglykol und der Polyhydroxycarbonsäure ebenfalls innerhalb der genannten Temperaturbereiche anschließt, bis der NCO-Gehalt auf unter 0,1 Gew.-% abgefallen ist. Prinzipiell ist auch die umgekehrte Reihenfolge der Umsetzung der Komponenten möglich. Dabei wird zuerst ein NCO-terminiertes Polyurethan aus Polyethylengylkol und Hydroxycarbonsäure aufgebaut, welches im zweiten Schritt mit dem Hydroxyalkylacrylat blockiert wird. Grundsätzlich werden hierbei Art und Mengenverhältnisse der Ausgangskomponenten innerhalb der genannten Bereiche so gewählt, daß, bezogen auf alle Ausgangsverbindungen ein NCO/OH-Äquivalentverhältnis von 0,9 bis 1,1 gewährleistet ist.

Die Mengenverhältnisse der Ausgangsverbindungen zur Herstellung des Emulgators B) betragen vorzugsweise 1 bis 30 Gew.-% Hydroxyalkyl(meth)acrylat, 50 bis 95 Gew.-% Polyglykol, 0,2 bis 10 Gew.-% Hydroxycarbonsäure und 2 bis 50 Gew.-% Polyisocyanat.

Die Urethanbildungsreaktionen können in an sich bekannter Weise z.B. mit Zinnoctoat, Dibutylzinndilaurat oder tertiären Aminen katalysiert werden. Ebenso kann das Urethanacrylat durch Zugabe geeigneter Inhibitoren und Antioxydantien von je 0,001 bis 0,3 Gew.-%, bezogen auf Gesamtmischung, vor vorzeitiger und unerwünschter Polymerisation geschützt werden.

Die auf diese Weise erhaltenen hydrophilen (Meth)acryloylgruppen aufweisenden Polyurethane weisen ein als Gewichtsmittel bestimmtes, nach der Methode der Gelpermeationschromatographie ermittelbares Molekulargewicht Mw von 1000 bis 30000, vorzugsweise 1500 bis 20000, eine Gehalt an olefinischen Doppelbindungen (berechnet als =C=C=, Molekulargewicht = 24) von mindestens 0,1 Gew.-%, vorzugsweise 0,2 bis 5,0 Gew.-% und einen Gehalt an über Polyethylenglykol eingebauten Ethylenoxideinheiten -C₂H₄O- von 20 bis 90, vorzugsweise 30 bis 85 Gew.-% auf.

Eine Neutralisation der vorhandenen Carboxylgruppen ist aber für die Emulgierwirkung der Produkte nicht unbedingt erforderlich, kann aber mit den bekannten Aminen wie z.B. Ammoniak, Triethylamin oder N-Methyldiethanolamin erfolgen.

Um den resultierenden Emulgator vor unerwünschter, vorzeitiger Polymerisation zu bewahren, empfiehlt es sich, bereits bei der Herstellung 0,001 - 0,5 Gew.-%, bezogen auf die Gesamtmischung, an Polymerisationsinhibitoren zuzusetzen.

Geeignete Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1 - 6 C-Atomen enthalten, Amine, vorzugsweise sekundäre Arylamine und ihre Derivate, Chinone, Kupfer-I-Salze organischer Säuren oder Anlagerungsverbindungen von Kupfer-(I)-halogeniden an Phosphite.

Namentlich seien genannt: 4,4'-Bis-(2,6-di-tert.-butylphenol), 1,3,5-Trimethyl-2,4,6-tris-(3,5-di-tert.-butyl-4-hydroxy-benzyl)-benzol, 4,4'-Butyliden-bis-(6-tert.-butyl-m-kresol), 3,5-Di-tert.-butyl-4-hydroxybenzylphosphonsäurediethylester, N,N'-Bis-(β-naphthyl).p-phenylendiamin, N,N'-Bis-(1-methylheptyl)-p-phenylendiamin, Phenyl-β-naphthylamin, 4,4'-Bis-(α,α-dimethylbenyzl)-diphenylamin, 1,3,5-Tris-(3,5,-di-tert.-butyl-4-hydroxy-hydrocinnamoyl)-hexahydro-s-triazin, Hydrochinon, Hydrochinonmonomethylether, p-Benzochinon, 2,5-Di-tert.-butylchinon, Toluhydrochinon, p-tert.-Butylbrenzkatechin, 3-Methylbrenzkatechin, 4-Ethylbrenzkatechin, Chloranil, Naphthochinon, Kupfernaphthenat, Kupferoctoat, p-Nitrosodimethylanilin.

Weitere geeignete Stabilisatoren sind in "Methoden der organischen Chemie" (Houben-Weyl), 4. Auflage, Band XIV/1, S. 433-452, 756, Georg Thieme Verlag, Stuttgart, 1961, beschrieben.

Zur Herstellung der erfindungsgemäßen Dispersionen werden die Komponenten A) und B) gemischt und in diese Mischung wird dann unter Rühren Wasser eingetragen. Das Gewichtsverhältnis der Komponente A) und B) beträgt 50 bis 95, vorzugsweise 70 bis 95 Gew.-% der Komponenten A) und 5 bis 50, vorzugsweise 5 bis 30 Gew.-% der Komponente B).

Zur Ausbildung einer feinteiligen Emulsion ist portionsweiser Wasserzusatz bei Temperaturen unterhalb 60 °C vorteilhaft. Es können auf diese Weise stabile Öl-in-Wasser-Emulsionen erhalten werden.

Die auf diese Weise erhaltenen wäßrigen Dispersionen stellen wertvolle wäßrige Bindemittel für Überzugsmittel dar. Sie können als solche oder in Kombination mit den aus der Lacktechnologie bekannten Hilfs- und Zusatzmitteln wie z.B. Füllstoffen, Pigmenten, Lösungsmitteln, Verlaufsmitteln u.dgl. zur Herstellung von Beschichtungen auf beliebigen Substraten verwendet werden.

Geeignete Substrate sind Papier, Kartonage, Leder, Holz, Kunststoffe, Vlies, Textilien, keramische Materialien, mineralische Materialien, Glas, Metall, Kunstleder, fotografische Materialien wie z.B. mit fotografischer Schicht versehenes Papier.

Die erfindungsgemäßen Dispersionen können Feststoffgehalte von 5 bis 90 Gew.-% besitzen. Unter Feststoffgehalt wird die Summe aus Bindemittel und Emulgator verstanden.

Der Auftrag dieser Dispersionen kann auf bekannte Weise durch Spritzen, Rakeln, Walzen, Streichen, Tauchen oder Gießen erfolgen. Nach Verdunsten des Wassers sowie gegebenenfalls mitverwendeter inerter Lösungsmitteln kann die Vernetzung der Überzüge entweder mittels energiereicher Strahlung, wie UV-Licht, Elektronen- oder Gammastrahlen oder durch Härtung mit Metallsalzen von Sikkativsäuren und (Hydro)-peroxiden bei Temperaturen zwischen 80 und 250 °C erfolgen.

Werden die erfindungsgemäßen Dispersionen durch UV-Licht gehärtet, so ist der Zusatz von Fotoinitiatoren erforderlich. Diese werden in der Regel im Bindemittel gelöst und mit diesem in der wäßrigen Phase dispergiert oder nachträglich zugefügt und dispergiert.

Als Fotoinitiatoren sind die üblicherweise eingesetzten Verbindungen geeignet, wie z.B. in der Monographie von J. Kosar, Light-Sensitive Systems, J. Wiley & Sons, New York - London - Sydney, 1965 beschrieben sind.

Weiterhin gut geeignet sind Benzoinether wie Benzoinisopropylether, Benzilketale, wie z.B. Benzildimethylketal und Hydroxyalkylphenole, wie z.B. 2-Hydroxy-2-methyl-1-phenyl-propan-1-on.

Die erwähnten Fotoinitiatoren, die je nach Verwendungszweck der erfindungsgemäßen Massen in Mengen zwischen 0,1 und 10 Gew.-%, vorzugsweise 0,1 bis 5 Gew.-%, bezogen auf das Gewicht der dispergiert vorliegenden Bindemittel eingesetzt werden, können als einzelne Substanz oder, wegen häufiger vorteilhafter Effekte auch in Kombination miteinander verwendet werden.

Als Strahlenquellen zu Durchführung der Photopolymerisation können künstliche Strahler, deren Emission im Bereich von 2500 - 5000 Å, vorzugsweise 3000 - 4000 Å liegt, verwendet werden. Vorteilhaft sind Quecksilberdampf-, Xenon-und Wolfram-Lampen, insbesondere Quecksilberhochdruckstrahler.

In der Regel lassen sich Schichten der erfindungsgemäßen Reaktionsprodukte in weniger als einer Sekunde zu einem Film aushärten.

Werden Füllstoffe mitverwendet, so ist deren Einsatz auf solche beschränkt, die durch ihr Absorptionsverhalten den Polymerisationsvorgang nicht unterdrücken. Beispielsweise können Talkum, Schwerspat, Kreide, Gips, Kieselsäuren, Asbestmehle und Leichtspat als lichtdurchlässige Füllstoffe verwendet werden.

Erfolgt die Härtung durch thermische Initiatoren oder durch energiereiche Strahlung, z.B. Elektronenstrahlung oder γ-Strahlung, so sind prinzipiell alle Füllstoffe, Pigmente und Verstärkungsmaterialien, wie sie üblicherweise eingesetzt werden, verwendbar.

### Herstellung der Bindemittel

### Beispiel B1:

870 Teile EUREPOX® RV-C (handelsüblicher Diglycidylether auf Basis von Cyclohexandimethanol der Fa. SCHERING AG, Epoxidgehalt: 9,1 %), 2,5 Teile Hydrochinonmonomethylether und 6 Teile Triphenylphosphin werden unter Durchleiten von Luft auf 90 °C erhitzt und binnen 2 h mit 335 Teilen Acrylsäure versetzt. Unter gleichen Bedingungen wird bis zu einer Säurezahl < 5 nachgerührt. Man erhält ein hellgelbes Produkt mit einer Viskosität von 6100 mPas und einem Doppelbindungsgehalt von 9,1 %.

### Beispiel B2:

3348 Teile BECKOPOX® EP 140 (handelsüblicher Diglycidylether auf Basis von Bisphenol A der HOECHST AG, Epoxidgehalt: 8,6 %), 1,4 Teile Hydrochinonmonomethylether und 16 Teile Triethylamin werden unter Durchleiten von Luft auf 90 °C erhitzt und binnen 2 h mit 1296 Teilen Acrylsäure versetzt. Unter gleichen Bedingungen wird bis zu einer Säurezahl < 5 nachgerührt. Man erhält ein hellgelbes Produkt mit einer Viskosität von 10500 mPas und einem Doppelbindungsgehalt von 9,2 %.

### Beispiel B3:

273 Teile Isophorondiisocyanat, 0,8 Teile 2,6-Di-tert.-butyl-4-methylphenol und 1,3 Teile Dibutylzinndilaurat werden unter Luftdurchleiten bei Raumtemperatur gemischt und binnen 2 h mit einer Mischung aus 166 Teilen 2-Hydroxybutylacrylat, 17 Teilen Hydroxyethylacrylat, 23 Teilen 2-Hydroxybutylacrylat und 160 Teilen eines trifunktionellen Caprolactons (OH-Zahl: 308 mg KOH/g) versetzt.

Anschließend werden 97 Teile Sartomer® 454 (handelsübliches Triacrylat eines ethoxylierten Trimethylolpropans der Fa. Cray-Valley) zugegeben und solange nachgerührt bis ein Isocyanatgehalt von < 0,2 % erreicht ist. Man erhält ein farbloses Produkt mit einer Viskosität von 2400 mPas und einem Doppelbindungsgehalt von 7,0 %.

### Herstellung der Emulgatoren

### Beispiel E1:

300 Teile Polyethylenglykol (mittl. Molekulargewicht 6000) und 3,4 Teile Dimethylolpropionsäure werden unter Rühren auf 100 °C erhitzt und durch Anlegen von Wasserstrahlvakuum entwässert. Nach Abkühlung auf 55 °C werden 0,2 Teile Dibutylzinndilaurat und 84,4 Teile Sartomer 454 (handelsübliches Triacrylat eines ethoxylierten Trimethylolpropans der Fa. Cray-Valley) zugegeben. Unter Durchleiten von Luft werden binnen 30 min 17,4 Teile Toluylendiisocyanat zugetropft; nach weiteren 15 min werden 16,7 Teile eines Umsetzungsproduktes aus 12,9 Teilen Cardura E10 (handelsüblicher Glycidylester der Versaticsäure der Fa. SHELL) und 3,8 Teilen Acrylsäure zugetropft. Bei gleicher Temperatur wird dann bis Erreichen eines NCO-Gehaltes < 0,1 % nachgerührt. Nach Zugabe von 0,3 Teilen Hydrochinonmonomethylethers wird dann mit 927 Teilen Wasser verdünnt.

Man erhält eine trübe Emulgatorlösung mit einer Viskosität von 1200 mPas und einem pH-Wert von 3,8.

### Beispiel E2:

17,4 Teile Toluylendiisocyanat und 0,2 Teile Dibutylzinndilaurat werden auf 40 °C erhitzt und binnen 60 min und unter Durchleiten von Luft mit 16,7 Teilen eines Umsetzungsproduktes aus 12,9 Teilen Cardura® E10 (handelsüblicher Glycidylester der Versaticsäure der Fa. SHELL) und 3,8 Teilen Acrylsäure versetzt.

Nach Erreichen des theoretischen Isocyanatgehaltes wird dieses so erhaltene halbverkappte Isocyanat bei 60 °C zu einer Lösung aus 84,4 Teilen Sartomer 454 (handelsübliches Triacrylat eines ethoxylierten Trimethylolpropans der Fa. Cray-Valley) und einer bei 100 °C im Vakuum entwässerten, aus 300 Teilen Polyethylenglykol (mittl. Molekulargewicht 6000) und 3,4 Teilen Dimethylolpropionsäure bestehenden Mischung zugetropft.

Bei gleicher Temperatur wird dann bis Erreichen eines NCO-Gehaltes < 0,1 % nachgerührt. Nach Zugabe von 0,3 Teilen Hydrochinonmonomethylethers wird dann mit 927 Teilen Wasser verdünnt.

Man erhält eine trübe Emulgatorlösung mit einer Viskosität von 1600 mPas und einem pH-Wert von 3,6.

### Beispiel E3:

300 Teile Polyethylenglykol (mittl. Molekulargewicht 6000) und 3,4 Teile Dimethylolpropionsäure werden unter Rühren auf 100 °C erhitzt und durch Anlegen von Wasserstrahlvakuum entwässert. Nach Abkühlung auf 55 °C werden 0,2 Teile Dibutylzinndilaurat und 86 Teile Sartomer 454 (handelsübliches Triacrylat eines ethoxylierten Trimethylolpropans der Fa. Cray-Valley) zugegeben. Unter Durchleiten von Luft werden binnen 30 min 22,2 Teile Isophorondiisocyanat zugetropft; nach weiteren 15 min werden 16,7 Teile eines Umsetzungsproduktes aus 12,9 Teilen Cardura E10 (handelsüblicher Glycidylester der Versaticsäure der Fa. SHELL) und 3,8 Teilen Acrylsäure zugetropft. Bei gleicher Temperatur wird dann bis Erreichen eines NCO-Gehaltes < 0,1 % nachgerührt. Nach Zugabe von 0,3 Teilen Hydrochinonmonomethylether wird dann mit 1285 Teilen Wasser verdünnt.

Man erhält eine trübe Emulgatorlösung mit einer Viskosität von 150 mPas und einem pH-Wert von 3,8.

### Beispiel E4:

250 Teile Polyethylenglykol (mittl. Molekulargewicht 10000) und 1,7 Teile Dimethylolpropionsäure werden unter Rühren auf 100 °C erhitzt und durch Anlegen von Wasserstrahlvakuum entwässert. Nach Abkühlung auf 55 °C werden 0,1 Teile Dibutylzinndilaurat und 67,2 Teile Sartomer 454 (handelsübliches Triacrylat eines ethoxylierten Trimethylolpropans der Fa. Cray-Valley) zugegeben. Unter Durchleiten von Luft werden binnen 30 min 8,7 Teile Toluylendiisocyanat zugetropft; nach weiteren 15 min werden 8,4 Teile eines Umsetzungsproduktes aus 6,3 Teilen Cardura E10 (handelsüblicher Glycidylester der Versaticsäure der Fa. SHELL) und 1,9 Teilen Acrylsäure zugetropft. Bei gleicher Temperatur wird dann bis Erreichen eines NCO-Gehaltes < 0,1 % nachgerührt. Nach Zugabe von 0,1 Teilen Hydrochinonmonomethylether wird dann mit 1009 Teilen Wasser verdünnt.

Man erhält eine trübe Emulgatorlösung mit einer Viskosität von 790 mPas und einem pH-Wert von 3,8.

### Beispiel E5:

17,4 Teile Toluylendiisocyanat und 0,2 Teile Dibutylzinndilaurat werden auf 40 °C erhitzt und binnen 60 min und unter Durchleiten von Luft mit 16,7 Teilen eines Umsetzungsproduktes aus 12,9 Teilen Cardura E10 (handelsüblicher Glycidylester der Versaticsäure der Fa. SHELL) und 3,8 Teilen Acrylsäure versetzt. Nach Erreichen des theoretischen Isocyanatgehaltes wird dieses so erhaltene halbverkappte Isocyanat bei 60 °C zu einer Lösung bestehend aus 145 Teilen Aceton und einer bei 100 °C im Vakuum entwässerten, aus 300 Teilen Polyethylenglykol (mittl. Molekulargewicht 6000) und 3,4 Teilen Dimethylolpropionsäure bestehenden Mischung getropft.

Bei gleicher Temperatur wird dann bis Erreichen eines NCO-Gehaltes < 0,1 % nachgerührt. Nach Zugabe von 0,3 Teilen Hydrochinonmonomethylether wird dann im Vakuum das Aceton ausdestilliert und mit 900 Teilen Wasser verdünnt.

Man erhält eine trübe Emulgatorlösung mit einer Viskosität von 1100 mPas und einem pH-Wert von 4,3.

### Herstellung der Dispersionen

### Beispiel D1

1610 Teile des Bindemittels B1 werden unter Rühren mit 560 Teilen des Emulgators E1 auf 40 °C erhitzt und homogenisiert. Binnen 5 min werden unter Rühren mit einem Dissolver (U = 20 m/sec) 380 Teile Wasser eingetragen. Nach 15 min Rühren wird die Dispersion auf Raumtemperatur abgekühlt und mit 950 Teilen Wasser verdünnt. Man erhält eine weiße milchige Dispersion mit einer Viskosität von 350 mPas und einem pH-Wert von 3,9.

### Beispiel D2

276 Teile des Bindemittels B2 werden unter Rühren mit 96 Teilen des Emulgators E1 auf 40 °C erhitzt und homogenisiert. Binnen 5 min werden unter Rühren mit einem Dissolver (U = 20 m/sec) 80 Teile Wasser eingetragen. Nach 15 min Rühren wird die Dispersion auf Raumtemperatur abgekühlt und mit 148 Teilen Wasser verdünnt. Man erhält eine weiße milchige Dispersion mit einer Viskosität von 680 mPas und einem pH-Wert von 4,3.

### Beispiel D3

276 Teile des Bindemittels B2 werden unter Rühren mit 96 Teilen des Emulgators E5 auf 40 °C erhitzt und homogenisiert. Binnen 5 min werden unter Rühren mit einem Dissolver (U = 20 m/sec) 80 Teile Wasser eingetragen. Nach 15 min Rühren wird die Dispersion auf Raumtemperatur abgekühlt und mit 148 Teilen Wasser verdünnt. Man erhält eine weiße milchige Dispersion mit einer Viskosität von 540 mPas und einem pH-Wert von 4,5.

### Beispiel D4

184 Teile des Bindemittels B2 werden unter Rühren mit 64 Teilen des Emulgators E5 auf 40 °C erhitzt und homogenisiert. Binnen 5 min werden unter Rühren mit einem Flügelrührer (Drehzahl=400 U/min) 65 Teile Wasser eingetragen. Nach 2 h Rühren wird die Dispersion auf Raumtemperatur abgekühlt und mit 131 Teilen Wasser verdünnt. Man erhält eine weiße milchige Dispersion mit einer Viskosität von 750 mPas und einem pH-Wert von 3,5.

### Beispiel D5

368 Teile des Bindemittels B3 werden unter Rühren mit 128 Teilen des Emulgators E1 auf 40 °C erhitzt und homogenisiert. Binnen 5 min werden unter Rühren mit einem Flügelrührer (Drehzahl=400 U/min) 140 Teile Wasser eingetragen. Nach 2 h Rühren wird die Dispersion auf Raumtemperatur abgekühlt und mit 164 Teilen Wasser verdünnt. Man erhält eine weiße milchige Dispersion mit einer Viskosität von 300 mPas und einem pH-Wert von 4,0.

## Patentansprüche

1. Wäßrige strahlenhärtbare Bindemitteldispersion enthaltend im wesentlichen Massenanteile bezogen auf die Summe der Massen von (A) und (B) von
A) 50 bis 95 % eines strahlenhärtbaren, (Meth)acrylatgruppen enthaltenden Bindemittels und
B) 5 bis 50 % eines strahlenhärtbaren, als Emulgator wirkenden Polyurethans mit einer gewichtsmittleren molaren Masse von 1 bis 30 kg/mol, erhalten durch Umsetzung von Hydroxyalkyl(meth)acrylaten mit einer molaren Masse von 116 bis 1000 g/mol, Polyalkylenätherglykolen mit einer zahlenmittleren molaren Masse von 400 bis 20 000 g/mol, wobei mindestens 80 % der Oxyalkyleneinheiten Oxyäthyleneinheiten sind, Polyhydroxycarbonsäuren und Polyisocyanaten.

2. Wäßrige strahlenhärtbare Bindemitteldispersion nach Anspruch 1, dadurch gekennzeichnet, daß der Emulgator durch Umsetzung von 1 bis 30 Gew.-% Hydroxyalkyl(meth)acrylat, 50 bis 95 Gew.-% Polyglykol, 0,2 bis 10 Gew.-% Hydroxycarbonsäure und 2 bis 50 Gew.-% Polyisocyanat erhalten wird.

3. Wäßrige strahlenhärtbare Bindemitteldispersion nach Anspruch 1, dadurch gekennzeichnet, daß die Komponente A) ein Polyacrylat, Polyepoxyacrylat, Polyurethanacrylat, Polyesteracrylat, Polyetheracrylat oder Melamin-Acrylat oder deren Gemisch ist.

4. Verwendung der wäßrigen strahlenhärtbaren Bindemitteldispersionen nach Anspruch 1 zur Herstellung von strahlenhärtbaren Überzugsmitteln.

## Claims

1. An aqueous, radiation-curable binder dispersion essentially containing mass fractions, relative to the sum of the masses of (A) and (B), of
A) 50 to 95% of a radiation-curable binder containing (meth)acrylate groups, and
B) 5 to 50% of a radiation-curable polyurethane acting as an emulsifier and having a weight average molar mass of 1 to 30 kg/mol, which is obtained by reaction of hydroxyalkyl(meth)acrylates having a molar mass of 116 to 1000 g/mol; polyalkylene ether glycols having a number average molar mass of 400 to 20,000 g/mol, with at least 80% of the oxyalkylene units being oxyethylene units; polyhydroxycarboxylic acids; and polyisocyanates.

2. An aqueous, radiation-curable binder dispersion as claimed in claim 1, wherein the emulsifier is obtained by reaction of 1 to 30 % by weight of hydroxyalkyl(meth)acrylate, 50 to 95 % by weight of polyglycol, 0.2 to 10 % by weight of hydroxycarboxylic acid and 2 to 50 % by weight of polyisocyanate.

3. An aqueous, radiation-curable binder dispersion as claimed in claim 1, wherein component A) is a polyacrylate, polyepoxy acrylate, polyurethane acrylate, polyester acrylate, polyether acrylate or melamine acrylate or a mixture thereof.

4. The use of an aqueous, radiation-curable binder dispersion as claimed in claim 1 for the preparation of radiation-curable coating agents.

## Revendications

1. Dispersion aqueuse de liant durcissable par irradiation, contenant essentiellement des fractions en masse, rapportées à la somme des masses de (A) et (B), de
A) 50 à 95 % d'un liant durcissable par irradiation contenant des groupes (méth)acrylate et
B) 5 à 50 % d'un polyuréthane durcissable par irradiation, à action émulsionnante, ayant une masse moléculaire moyenne en poids de 1 à 30 kg/mol, obtenu par réaction de (méth)acrylates d'hydroxyalkyle ayant une masse moléculaire de 116 à 1000 g/mol, de poly(alkylène-étherglycols) ayant une masse moléculaire moyenne en nombre de 400 à 20 000 g/mol et dont au moins 80 % des unités oxyalkylène sont des unités oxyéthylène, d'acides polyhydroxycarboxyliques et de polyisocyanates.

2. Dispersion aqueuse de liant durcissable par irradiation selon la revendication 1, caractérisée en ce que l'émulsionnant est obtenu par réaction de 1 à 30 % en masse de (méth)acrylate d'hydroxyalkyle, de 50 à 95 % en masse de polyglycol, de 0,2 à 10 % en masse d'acide hydroxycarboxylique et de 2 à 50 % en masse de polyisocyanate.

3. Dispersion aqueuse de liant durcissable par irradiation selon la revendication 1, caractérisée en ce que le constituant A) est un polyacrylate, un polyépoxyacrylate, un poly(uréthane-acrylate), un polyesteracrylate, un polyétheracrylate ou un mélanine-acrylate ou un de leurs mélanges.

4. Utilisation des dispersions aqueuses de liants durcissables par irradiation selon la revendication 1 pour la préparation de compositions de revêtements durcissables par irradiation.
